Europäisches Patentamt

European Patent Office

Office européen des brevets

(19)

(11) Veröffentlichungsnummer: **0 305 745**

**A1**

(12) **EUROPÄISCHE PATENTANMELDUNG**

(21) Anmeldenummer: 88112406.9

(22) Anmeldetag: 30.07.88

(51) Int. Cl.⁴: **C08K 3/00 , C08K 13/06 , C08L 67/06 , //(C08K3/00, 3:22,3:32),(C08K13/06,3:22, 9:10)**

(30) Priorität: 27.08.87 DE 3728629

(43) Veröffentlichungstag der Anmeldung:
08.03.89 Patentblatt 89/10

(84) Benannte Vertragsstaaten:
AT BE CH DE ES FR GB IT LI LU NL SE

(71) Anmelder: HOECHST AKTIENGESELLSCHAFT
Postfach 80 03 20
D-6230 Frankfurt am Main 80(DE)

(72) Erfinder: Staendeke, Horst, Dr.
Alte Honrather Strasse 22
D-5204 Lohmar(DE)
Erfinder: Scharf, Daniel, Dr.
120 Adirondack Drive
East Greenwich Rhode Island 02818(US)

(54) Flammwidrige polymere Massen sowie Verfahren zu ihrer Herstellung.

(57) Die flammwidrigen polymeren Massen der Erfindung enthalten als Flammschutzsystem eine Phosphor-Stickstoff-Komponente und Aluminiumhydroxid. Zur Herstellung von Formkörpern aus flammwidrigen polymeren Massen vermischt man ein härtbares Kunstharz mit diesem Flammschutzsystem und stellt aus dieser Mischung dann entweder bei Drucken von 3-1o bar und Temperaturen von 2o-6o° C oder 8o-15o° C oder bei Drucken von 5o-15o bar und Temperaturen von 14o-16o° C flammwidrige Formkörper her.

EP 0 305 745 A1

## Flammwidrige polymere Massen sowie Verfahren zu ihrer Herstellung

Die Erfindung betrifft flammwidrige polymere Massen, vorzugsweise Duroplaste und insbesondere ungesättigte Polyesterharze.

Es ist bekannt, ungesättigte Polyesterharze dadurch flammwidrig einzustellen, daß entweder anorganische Flammschutzmittel wie Aluminiumhydroxid oder organische Flammschutzmittel wie Chlorparaffine oder halogenierte Biphenyle zugesetzt werden oder daß eine chemische Modifizierung der Säure- oder Alkoholkomponente oder des ungesättigten Monomers erfolgt, wobei häufig eine Halogenierung durchgeführt wird. Bei halogenhaltigen ungesättigten Polyestern wird vielfach als Synergist zusätzlich Antimontrioxid eingesetzt [siehe "Handbook of Plastics Flammability and Combustion Toxicology", Noyes Publications, Park Ridge, N.J., US (1983)].

Unter ungesättigten Polyesterharzen (UP-Harzen) sollen die Produkte verstanden werden, die durch Kondensationsreaktionen aus gesättigten und ungesättigten Dicarbonsäuren oder deren Anhydriden und Diolen hergestellt werden können. Die wichtigsten Dicarbonsäuren für diese Verwendung sind Maleinsäure, meist in Form des Anhydrids, und Fumarsäure. Aus der Reihe der Diole wird bevorzugt Propandiol-1,2 eingesetzt. Das am häufigsten verwendete reaktionsfähige Monomer stellt das Styrol dar, das beliebig mit Polyesterharzen mischbar ist und sich gut copolymerisieren läßt. Der Styrol-Anteil in ungesättigten Polyesterharzen liegt üblicherweise zwischen 3o und 4o Masse% [siehe Ullmann's Encyklopädie der technischen Chemie, Bd. 19, S. 79-88, Verlag Chemie, Weinheim (1980)].

Obwohl Aluminiumhydroxid und Ammoniumpolyphosphat, für sich allein geprüft, keine wirksamen Flammschutzmittel für ungesättigte Polyester darstellen, wurde nun überraschend gefunden, daß sich eine Kombination von Ammoniumpolyphosphat und Aluminiumhydroxid als ein sehr effektives Flammschutzsystem für ungesättigte Polyester erweist.

Im einzelnen betrifft die Erfindung flammwidrige polymere massen, welche dadurch gekennzeichnet sind, daß sie als Flammschutzsystem eine Phosphor-Stickstoff-Komponente und Aluminiumhydroxid enthalten.

Das Verfahren der Erfindung zur Herstellung von Formkörpern aus flammwidrigen polymeren Massen ist dadurch gekennzeichnet, daß man ein härtbares Kunstharz mit einem Flammschutzsystem aus einer Phosphor-Stickstoff-Komponente und Aluminiumhydroxid vermischt und aus dieser Mischung dann entweder nach dem Verfahren des kalten Naßpressens bei Drücken von 3-1o bar und Temperaturen von 2o-6o°C oder nach dem Verfahren des warmen Naßpressens bei Drücken von 3-1o bar und Temperaturen von 8o-15o°C oder nach dem Verfahren der Polyesterharzmatten-Fertigung bei Drücken von 5o-15o bar und Temperaturen von 14o-16o°C flammwidrige Formkörper herstellt.

Darüberhinaus können die flammwidrigen polymeren Massen gemäß der Erfindung bevorzugt und unabhängig voneinander dadurch gekennzeichnet sein, daß

a) sie als Phosphor-Stickstoff-Komponente 5-5o Masseteile Ammoniumpolyphosphat je 1oo Masseteile Polymer enthalten;

b) das Ammoniumpolyphosphat 0,5 bis 25 Masse% eines wasserunlöslichen, gegebenenfalls gehärteten Kunstharzes, welches die einzelnen Ammoniumpolyphosphatteilchen umhüllt, enthält;

c) das Ammoniumpolyphosphat 0,5 bis 25 Masse% eines Reaktionsproduktes aus einem Polyisocyanat mit einem Carbodiimidisierungskatalysator, wobei das Polycarbodiimid die einzelnen Ammoniumpolyphosphatteilchen umhüllt, enthält;

d) das Ammoniumpolyphosphat 0,5 bis 25 Masse% eines Reaktionsproduktes aus einem Polyisocyanat und einer Polyhydroxyverbindung, wobei das gebildete Polyurethan die einzelnen Ammoniumpolyphosphatteilchen umhüllt, enthält;

e) das Ammoniumpolyphosphat 0,5 bis 25 Masse% eines Reaktionsproduktes aus einem Polyisocyanat mit einem Trimerisierungskatalysator, wobei das gebildete Polyisocyanurat die einzelnen Ammoniumpolyphosphatteilchen umhüllt, enthält;

f) das Ammoniumpolyphosphat 0,5 bis 25 Masse% eines Reaktionsproduktes aus einem Polyisocyanat und Wasser, wobei der gebildete Polyharnstoff die einzelnen Ammoniumpolyphosphatteilchen umhüllt, enthält;

g) das Ammoniumpolyphosphat 0,5 bis 25 Masse% eines gehärteten Melamin/Formaldehyd-Harzes, wobei das Melamin/Formaldehyd-Harz die einzelnen Ammoniumpolyphosphatteilchen umhüllt, enthält;

h) das Ammoniumpolyphosphat 0,5 bis 25 Masse% eines gehärteten Epoxidharzes, wobei das Epoxidharz die einzelnen Ammoniumpolyphosphatteilchen umhüllt, enthält;

i) sie 5o-175 Masseteile Aluminiumhydroxid je 1oo Masseteile Polymer enthalten;

j) sie Ammoniumpolyphosphat und Aluminiumhydroxid im Masseverhältnis von 1 : 5 bis 1 : 15 enthalten;

k) sie Duroplaste sind;

l) sie ungesättigte Polyesterharze sind;

m) sie durch Glasfasern verstärkt sind.

Das Aluminiumhydroxid wird vorzugsweise in Form von Produkten eingesetzt, deren Herstellungsverfahren in EP-B2-0 011 667 beschrieben wird.

Als Ammoniumpolyphosphat wird vorzugsweise ein freifließendes, pulverförmiges, in Wasser schwer lösliches Ammoniumpolyphosphat der Formel $(NH_4PO_3)_n$ mit n = 2o bis 1ooo, insbesondere 5oo bis 1ooo, eingesetzt. Es besitzt bevorzugt eine Teilchengröße > 99 % < 45 $\mu$m.

Die nachfolgenden Beispiele und Tabellen sollen die Erfindung näher erläutern, ohne daß diese jedoch auf den Gegenstand der Beispiele beschränkt ist. Die Teile-Angaben verstehen sich als Masseteile.

Beispiel 1


1. Herstellung des Polyester/Flammschutzmittel-Gemischs

100 Teile ® Alpolit UP 002 (Hoechst AG, Frankfurt/Main)
- es handelt sich um ein in Styrol gelöstes, niedrigviskoses und hochreaktives ungesättigtes Polyesterharz -
25 Teile ® Exolit 422 (Hoechst AG, Frankfurt/Main)
- es handelt sich um ein feinkörniges, in Wasser schwer lösliches Ammoniumpolyphosphat der Formel $(NH_4PO_3)_n$, wobei n = ca. 700; die Teilchengröße des Ammoniumpolyphosphats beträgt > 99 % < 45 $\mu$m -
0,3 Teile Kobalt-Beschleuniger NL 49 P (Akzo Chemie GmbH, Düren)
- es handelt sich um eine Kobaltoktoat-Lösung in Dibutylphthalat mit einem Kobaltgehalt von 1 Masse% -
werden in einem geeigneten Gefäß mit einer Dissolverscheibe gemischt. Nach Zugabe von
2,0 Teilen ® Butanox M 50 (Akzo Chemie GmbH, Düren)
- es handelt sich um Methylethylketonperoxid, das mit Dimethylphthalat phlegmatisiert ist. Es liegt als klare, farblose Flüssigkeit mit einem Aktiv-Sauerstoffgehalt von mind. 9 Masse% vor -
wird nochmals gemischt.


2. Herstellung der UP-Harzlaminate

Etwa die Hälfte des Polyester/Flammschutzmittel-Gemischs wird auf der Trennfolie [® Hostaphan RN 100/0,1 mm dick (Hoechst AG, Frankfurt/Main)] gleichmäßig verteilt. Dann wird eine passend zugeschnittene, styrolunlöslich gebundene Textilglasmatte vom Flächengewicht 450 g/m² eingelegt. Mit einem Lammfellroller wird dann die 2. Hälfte des Polyester/Flammschutzmittel-Gemischs auf der Glasmatte gleichmäßig verteilt und gleichzeitig die eingeschlossene Luft entfernt. Das Laminat wird anschließend mit einer weiteren Trennfolie abgedeckt.


3. Herstellung der Prüfplatte

Aus dem Laminat wird dann in einer warmwasserbeheizten BECKER-VAN HÜLLEN-Presse bei einer Temperatur von 50°C und einem Druck von 10 bar in einem Zeitraum von etwa 1 Stunde eine Preßplatte von 1,6 mm Dicke hergestellt.


4. Brandprüfungen

4.1. Die Prüfung des Brandverhaltens wurde nach der Vorschrift von Underwriters Laboratories "Test for Flammability of Plastic Material - UL 94" in der Fassung vom 2.5.1975 an Prüfkörpern von 127 mm Länge, 12,7 mm Breite und 1,6 mm Dicke vorgenommen.

4.2. Der Sauerstoffindex wurde in einer modifizierten Apparatur in Anlehnung an ASTM-D 2863-74 bestimmt.

Die Ergebnisse der Brandprüfungen sind in Tabelle 1 aufgeführt.

Beispiele 2 - 25

Die Herstellung und Prüfung der Testplatten erfolgte in der in Beispiel 1 beschriebenen Arbeitsweise. Die in art und Gehalt an Flammschutzmittel vom Beispiel 1 abweichenden Angaben sind in den Tabellen 1 - 4 in den Spalten 2 und 3 aufgeführt.

In den Beispielen 4 - 25 wurden außerdem folgende Produkte eingesetzt:

® Exolit 462 (Hoechst AG, Frankfurt/Main)

- es handelt sich um ein mikroverkapseltes Ammoniumpolyphosphat, das nach dem Verfahren der EP-B-0 180 795 hergestellt wurde und etwa 10 Masse% Kapselmaterial bestehend aus einem gehärteten Melamin/Formaldehyd-Harz enthält.

® Exolit 455 (Hoechst AG, Frankfurt/Main)

- es handelt sich um ein mikroverkapseltes Ammoniumpolyphosphat, das nach dem Verfahren der EP-B-0 093 993 (= US-A-4 514 328) hergestellt wurde und etwa 10 Masse% Kapselmaterial bestehend aus einem Epoxidharz enthält.

® Apyral 2 (VAW Vereinigte Aluminium Werke AG, Bonn)

® Apyral 3 (VAW, Bonn)

® Apyral 4 (VAW, Bonn)

- Es handelt sich um Aluminiumhydroxid-Typen, die aus dem BAYER-Prozeß stammen und nach einem speziellen Verfahren modifiziert wurden (EP-B-0 011 667).

Aus Tabelle 1 kann entnommen werden, daß in ungesättigtem Polyester mit Ammoniumpolyphosphat im Konzentrationsbereich bis zu 75 Teilen/100 Teile Polyesterharz keine Klassifizierung im UL 94-Vertikaltest erreicht werden kann. Gleiches gilt bei Verwendung von Aluminiumhydroxid für den Konzentrationsbereich bis zu 175 Teilen/100 Teile Polyesterharz.

Dagegen zeigen die Tabellen 2 - 4, daß überraschenderweise schon geringe Mengen Ammoniumpolyphosphat, auch in mit Kunstharzen mikroverkapselter Form, geeignet sind, in Kombination mit Aluminiumhydroxid die UL 94-Klassen V-1 und V-0 zu erreichen.

Tabelle 1:

| Brandtest gemäß UL 94-Vertikaltest [1] Sauerstoffindex gemäß ASTM-D 2863-74 | | | | | |
|---|---|---|---|---|---|
| Vergleichsbeispiele | Art | Flammschutzsystem | | UL 94-Vertikaltest | Sauerstoff-Index |
| | | Einzelmenge T/100T UP [2] | Gesamtmenge T/100T UP [2] | | |
| 1 | Exolit 422 | 25 | 25 | n.k.[3] | 0,23 |
| 2 | Exolit 422 | 50 | 50 | n.k. | 0,25 |
| 3 | Exolit 422 | 75 | 75 | n.k. | 0,26 |
| 4 | Apyral 4 | 125 | 125 | n.k. | 0,30 |
| 5 | Apyral 4 | 150 | 150 | n.k. | 0,33 |
| 6 | Apyral 4 | 175 | 175 | n.k. | 0,37 |
| 7 | Apyral 2 | 150 | 150 | n.k. | 0,33 |
| 8 | Apyral 3 | 150 | 150 | n.k. | 0,32 |

[1] Underwriters Laboratories "Test for Flammability of Plastic Material-UL 94" Probekörper: 127 mm Länge, 12,7 mm Breite und 1,6 mm Dicke

[2] UP = ® Alpolit UP 002; T = Teile

[3] n.k. = nicht klassifiziert als V-0, V-1 oder V-2

Tabelle 2:

| Brandtest gemäß UL 94-Vertikaltest [1] Sauerstoffindex gemäß ASTM-D 2863-74 | | | | | |
|---|---|---|---|---|---|
| Beispiele der Erfindung | Art | Flammschutzsystem | | UL 94-Vertikaltest | Sauerstoff-Index |
| | | Einzelmenge T/100T UP [2] | Gesamtmenge T/100T UP [2] | | |
| 9 | Exolit 422 | 10 | 160 | V-1 | 0,34 |
| | Apyral 4 | 150 | | | |
| 10 | Exolit 422 | 15 | 165 | V-1 | 0,36 |
| | Apyral 4 | 150 | | | |
| 11 | Exolit 422 | 20 | 170 | V-0 | 0,38 |
| | Apyral 4 | 150 | | | |
| 12 | Exolit 422 | 25 | 175 | V-0 | 0,40 |
| | Apyral 4 | 150 | | | |
| 13 | Exolit 422 | 30 | 180 | V-0 | 0,41 |
| | Apyral 4 | 150 | | | |
| 14 | Exolit 422 | 15 | 165 | V-0 | 0,40 |
| | Apyral 2 | 150 | | | |
| 15 | Exolit 422 | 15 | 165 | V-0 | 0,41 |
| | Apyral 3 | 150 | | | |

[1] Underwriters Laboratories "Test for Flammability of Plastic Material-UL 94" Probekörper: 127 mm Länge, 12,7 mm Breite und 1,6 mm Dicke

[2] UP = ® Alpolit UP 002; T = Teile

Tabelle 3:

| Brandtest gemäß UL 94-Vertikaltest [1] Sauerstoffindex gemäß ASTM-D 2863-74 | | | | | |
|---|---|---|---|---|---|
| Beispiele der Erfindung | Art | Flammschutzsystem | | UL 94-Vertikaltest | Sauerstoff-Index |
| | | Einzelmenge T/100T UP [2] | Gesamtmenge T/100T UP [2] | | |
| 16 | Exolit 462 | 10 | 160 | n.k.[3] | 0,35 |
| | Apyral 4 | 150 | | | |
| 17 | Exolit 462 | 15 | 165 | n.k. | 0,37 |
| | Apyral 4 | 150 | | | |
| 18 | Exolit 462 | 20 | 170 | V-0 | 0,38 |
| | Apyral 4 | 150 | | | |
| 19 | Exolit 462 | 25 | 175 | V-0 | 0,42 |
| | Apyral 4 | 150 | | | |
| 20 | Exolit 462 | 30 | 180 | V-0 | 0,43 |
| | Apyral 4 | 150 | | | |

[1] Underwriters Laboratories "Test for Flammability of Plastic Material-UL 94" Probekörper: 127 mm Länge, 12,7 mm Breite und 1,6 mm Dicke
[2] UP = ® Alpolit UP 002; T = Teile
[3] n.k. = nicht klassifiziert als V-0, V-1 oder V-2

Tabelle 4:

| Brandtest gemäß UL 94-Vertikaltest [1] Sauerstoffindex gemäß ASTM-D 2863-74 | | | | | |
|---|---|---|---|---|---|
| Beispiele der Erfindung | Art | Flammschutzsystem | | UL 94-Vertikaltest | Sauerstoff-Index |
| | | Einzelmenge T/100T UP [2] | Gesamtmenge T/100T UP [2] | | |
| 21 | Exolit 455 | 10 | 160 | V-1 | 0,36 |
| | Apyral 4 | 150 | | | |
| 22 | Exolit 455 | 15 | 165 | V-0 | 0,42 |
| | Apyral 4 | 150 | | | |
| 23 | Exolit 455 | 20 | 170 | V-0 | 0,42 |
| | Apyral 4 | 150 | | | |
| 24 | Exolit 455 | 25 | 175 | V-0 | 0,43 |
| | Apyral 4 | 150 | | | |
| 25 | Exolit 455 | 30 | 180 | V-0 | 0,43 |
| | Apyral 4 | 150 | | | |

[1] Underwriters Laboratories "Test for Flammability of Plastic Material-UL 94" Probekörper: 127 mm Länge, 12,7 mm Breite und 1,6 mm Dicke
[2] UP = ® Alpolit UP 002 ; T = Teile

6

Beispiel 26

1. Bie der Herstellung des Polyester/Flammschutzmittel-Gemischs wird in gleicher Weise verfahren, wie es in Beispiel 9 in Verbindung mit Beispiel 1, Punkt 1 beschrieben ist, wobei jedoch anstelle von 2,0 Teilen ® Butanox M 5o nunmehr 2,o Teile ® Trigonox 21 (Akzo Chemie GmbH, Düren) eingesetzt werden. Hierbei handelt es sich um Tertiärbutylperoktoat, das als klare, farblose Flüssigkeit mit einem Aktivsauerstoffgehalt von min. 7 Masse% vorliegt.

2. Die Herstellung der UP-Harzlaminate erfolgt in gleicher Weise, wie es in Beispiel 1, Punkt 2, beschrieben ist.

3. Bei der Herstellung der Prüfplatte wird im Gegensatz zu Beispiel 1, Punkt 3, bei einer Temperatur von 12o°C gearbeitet.

4. Bei den beiden Brandprüfungen wurden folgende Werte erhalten:
UL 94-Vertikaltest: V-1; Sauerstoffindex: 0,33.

Beispiel 27

1. Herstellung der Harzmatte

100 Teile ® Alpolit UP 3o6 (Hoechst Aktiengesellschaft, Frankfurt)
- es handelt sich um ein in Styrol gelöstes, hochreaktives ungesättigtes Polyesterharz -
25 Teile ® Exolit 422
125 Teile ® Apyral 4
4 Teile Zinkstearat
2 Teile ® Trigonox 29B5o (1,1-Ditertiärbutylperoxi-3,3,5-trimethylcyclohexan, phlegmatisiert mit Weichmacher; Akzo Chemie GmbH, Düren)
0,125 Teile Inhibitor (p-Benzochinon)
1,5 Teile Eindickungsmittel (MgO-Paste)
werden gemischt und in einer Harzmatten-Produktionsanlage verarbeitet, wobei 75 Teile Textilglasschnitzel über das Schneidwerk zugeführt werden (Firmenprospekt Hoechst Aktiengesellschaft, Verkauf Kunstharze, Anwendungstechnik Aktuell, ® Alpolit für Prepregs und Preßmassen, Abb. 1, September 1982).

2. Herstellung der Prüfplatte

Aus der Harzmatte wird dann in einer dampfbeheizten BECKER-VAN HÜLLEN-Presse bei einer Temperatur von 15o°C und einem Druck von 1oo bar in einem Zeitraum von 2 Minuten eine Preßplatte von 1,6 mm Dicke hergestellt.

3. Brandprüfungen

Bei den beiden Brandprüfungen wurden folgende Werte erhalten:
UL 94-Vertikaltest: Klasse V-0
Sauerstoffindex: 0,37

**Ansprüche**

1. Flammwidrige polymere Massen, dadurch gekennzeichnet, daß sie als Flammschutzsystem eine Phosphor-Stickstoff-Komponente und Aluminiumhydroxid enthalten.

2. Flammwidrige polymere Massen nach Anspruch 1, dadurch gekennzeichnet, daß sie als Phosphor-Stickstoff-Komponente 5 - 50 Masseteile Ammoniumpolyphosphat je 100 Masseteile Polymer enthalten.

3. Flammwidrige polymere Massen nach Anspruch 2, dadurch gekennzeichnet, daß das Ammoniumpolyphosphat 0,5 bis 25 Masse% eines wasserunlöslichen, gegebenenfalls gehärteten Kunstharzes, welches die einzelnen Ammoniumpolyphosphatteilchen umhüllt, enthält.

4. Flammwidrige polymere Massen nach Anspruch 2, dadurch gekennzeichnet, daß das Ammoniumpolyphosphat 0,5 bis 25 Masse% eines Reaktionsproduktes aus einem Polyisocyanat mit einem Carbodiimidisierungskatalysator, wobei das Polycarbodiimid die einzelnen Ammoniumpolyphosphatteilchen umhüllt, enthält.

5. Flammwidrige polymere Massen nach Anspruch 2, dadurch gekennzeichnet, daß das Ammoniumpolyphosphat 0,5 bis 25 Masse% eines Reaktionsproduktes aus einem Polyisocyanat und einer Polyhydroxyverbindung, wobei das gebildete Polyurethan die einzelnen Ammoniumpolyphosphatteilchen umhüllt, enthält.

6. Flamwidrige polymere Massen nach Anspruch 2, dadurch gekennzeichnet, daß das Ammoniumpolyphosphat 0,5 bis 25 Masse% eines Reaktionsproduktes aus einem Polyisocyanat mit einem Trimerisierungskatalysator, wobei das gebildete Polyisocyanurat die einzelnen Ammoniumpolyphosphatteilchen umhüllt, enthält.

7. Flammwidrige polymere Massen nach Anspruch 2, dadurch gekennzeichnet, daß das Ammoniumpolyphosphat 0,5 bis 25 Masse% eines Reaktionsproduktes aus einem Polyisocyanat und Wasser, wobei der gebildete Polyharnstoff die einzelnen Ammoniumpolyphosphatteilchen umhüllt, enthält.

8. Flammwidrige polymere Massen nach Anspruch 2, dadurch gekennzeichnet, daß das Ammoniumpolyphosphat 0,5 bis 25 Masse% eines gehärteten Melamin/Formaldehyd-Harzes, wobei das Melamin/Formaldehyd-Harz die einzelnen Ammoniumpolyphosphatteilchen umhüllt, enthält.

9. Flammwidrige polymere Massen nach Anspruch 2, dadurch gekennzeichnet, daß das Ammoniumpolyphosphat 0,5 bis 25 Masse% eines gehärteten Epoxidharzes, wobei das Epoxidharz die einzelnen Ammoniumpolyphosphatteilchen umhüllt, enthält.

10. Flammwidrige polymere Massen nach einem der vorhergehenden Ansprüche, dadurch gekennzeichnet, daß sie 50 - 175 Masseteile Aluminiumhydroxid je 100 Masseteile Polymer enthalten.

11. Flammwidrige polymere Massen nach mindestens einem der Ansprüche 2 - 10, dadurch gekennzeichnet, daß sie Ammoniumpolyphosphat und Aluminiumhydroxid im Masseverhältnis von 1 : 5 bis 1 : 15 enthalten.

12. Flammwidrige polymere Massen nach einem der vorhergehenden Ansprüche, dadurch gekennzeichnet, daß sie Duroplaste sind.

13. Flammwidrige polymere Massen nach einem der Ansprüche 1-11, dadurch gekennzeichnet, daß sie ungesättigte Polyesterharze sind.

14. Flammwidrige polymere Massen nach einem der vorhergehenden Ansprüche, dadurch gekennzeichnet, daß sie durch Glasfasern verstärkt sind.

15. Verfarhen zur Herstellung von Formkörpern aus flammwidrigen polymeren Massen, dadurch gekennzeichnet, daß man ein härtbares Kunstharz mit einem Flammschutzsystem aus einer Phosphor-Stickstoff-Komponente und Aluminiumhydroxid vermischt und aus dieser Mischung dann entweder nach dem Verfahren des kalten Naßpressens bei Drücken von 3 -1o bar und Temperaturen von 2o-6o°C oder nach dem Verfahren des warmen Naßpressens bei Drücken von 3-1o bar und Temperaturen von 8o-15o°C oder nach dem Verfahren der Polyesterharzmatten-Fertigung bei Drücken von 5o-15o bar und Temperaturen von 14o-16o°C flammwidrige Formkörper herstellt.

# EUROPÄISCHER RECHERCHENBERICHT

**Europäisches Patentamt**

Nummer der Anmeldung

EP 88 11 2406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 91, Nr. 36, 9. Juli 1979, Seite 37, Zusammenfassung Nr. 5950y, Columbus, Ohio, US; & JP-A-79 22 450 (SUMITOMO CHEMICAL CO. LTD) 20-02-1979 * Insgesamt * --- | 1 | C 08 K 3/00<br>C 08 K 13/06<br>C 08 L 67/06 //<br>(C 08 K 3/00<br>C 08 K 3:22<br>C 08 K 3:32 )<br>(C 08 K 13/06<br>C 08 K 3:22<br>C 08 K 9:10 ) |
| A | EP-A-0 178 529 (HOECHST AG) * Ansprüche * ----- | 3-9 | |

RECHERCHIERTE SACHGEBIETE (Int. Cl.4)

C 08 K
C 08 L

Der vorliegende Recherchenbericht wurde für alle Patentansprüche erstellt

| Recherchenort | Abschlußdatum der Recherche | Prüfer |
|---|---|---|
| DEN HAAG | 01-12-1988 | WILSON A.J.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument

EPO FORM 1503 03.82 (P0403)